# FASCICULE DE BREVET EUROPEEN

(11) **EP 0 449 718 B1**
(45) Date de publication et mention de la délivrance du brevet: **22.05.1996**
(21) Numéro de dépôt: 91400804.0
(22) Date de dépôt: 26.03.1991
(51) Int. Cl.: H01B 11/22, H01B 11/20, H01B 11/18, H04N 7/10

(54) **Câble mixte électrique et optique et application à la liaison entre une tête de camera et une unité de contrôle**
Elektrisches und optisches gemischtes Kabel und dessen Anwendung für eine Verbindung zwischen einem Kameragehäuse und einer Kontrolleinheit
Mixed electrical and optical cable and its application to a link between a camera head and a control unit

(30) Priorité: 27.03.1990 FR 9003876
(43) Date de publication de la demande: 02.10.1991
(73) Titulaire: THOMSON VIDEO EQUIPEMENT, F-95800 Cergy Saint Christophe (FR)
(72) Inventeur: Desmons, Gérard, F-92045 Paris La Defense (FR)
(74) Mandataire: Ruellan-Lemonnier, Brigitte

(56) Documents cités:
- EP-A- 0 006 364
- DE-A- 3 733 747
- GB-A- 1 172 272

## Description

La présente invention se rapporte à un câble mixte électrique et optique pour des applications concernant notamment la télévision haute définition (TVHD). L'invention concerne également une application du câble mixte à la liaison entre une tête de caméra et une unité de contrôle.

Classiquement pour relier une tête de caméra à une unité de contrôle, un câble triaxial électrique, c'est-à-dire un câble coaxial blindé, est utilisé. Ce câble a les caractéristiques suivantes :
- il est conçu pour transmettre tous les signaux vidéo ainsi que les signaux de service, tels que les signaux audio, interphone, télécommande et asservissement, par la technique du multiplexage en fréquence sur la structure coaxiale interne : chaque signal à transmettre module une fréquence porteuse différente. Ces fréquences porteuses sont multiplexées et le signal complexe résultant est véhiculé sur la structure coaxiale interne du câble triaxial ;
- il transmet l'alimentation de la tête de la caméra ;
- il transmet des signaux de service particuliers, dits "fonctionnement de secours", qui sont utiles lorsque l'équipement n'est pas en fonctionnement normal ;
- il permet la mise à la terre de la tête de la caméra par une tresse conductrice externe, cette tresse externe servant également de blindage pour le câble. La portée de ce type de câble est élevée (typiquement 1 à 1,5km), cependant, un tel câble triaxial standard affaiblit les signaux hautes fréquences de façon trop importante pour permettre la transmission des signaux de télévision haute définition ; l'affaiblissement typique est de 3,9dB pour 100m de câble à 60 MHz. Or, pour la télévision haute définition, les bandes passantes des signaux vidéo à transmettre sont beaucoup plus importantes que pour les signaux de télévision actuels ; les bandes passantes sont typiquement égales à 30 MHz voire 60 MHz, au lieu de 5 MHz actuellement. De plus, si les signaux sont digitalisés et transmis en numérique, le débit des informations binaires en série est très important : il est supérieur à 1 Gbit.

Il existe également des câbles uniquement à fibres optiques. Ces câbles sont utilisés pour les réseaux câblés. Cependant, ils n'ont pas de conducteur électrique pour l'alimentation, les signaux de secours, et la mise à la terre. Ils ne conviennent donc pas pour des applications en télévision haute définition.

Il existe aussi des câbles multiconducteurs qui ont été utilisés dans le passé sur certaines caméras ; la liaison réalisée par un tel câble est bi-directionnelle et chaque signal à transmettre est véhiculé par un conducteur différent. Cependant, leur technologie est ancienne, ils ont une faible portée (300 à 600m), ils sont fragiles, peu fiables, et présentent un encombrement important.

Enfin, il existe des câbles mixtes coaxiaux et fibres optiques qui sont utilisés pour les sonars. Dans ces câbles l'isolant de la structure coaxiale est rainuré pour insérer des fibres optiques. Ces câbles mixtes peuvent comporter jusqu'à dix fibres optiques. Cependant, leur structure ne convient pas pour les applications envisagées car elle n'a pas de symétrie de révolution et s'apparente beaucoup à la structure des câbles multiconducteurs.

Pour transmettre les signaux de télévision haute définition la structure la mieux appropriée est une structure de type triaxiale car elle est très robuste, elle présente l'avantage d'être quasiment universelle, et elle permet de transmettre l'alimentation, les signaux de service secours et la mise à la terre. Mais, pour résoudre les problèmes d'affaiblissement sement des signaux hautes fréquences dans les câbles triaxiaux standards, l'utilisation d'une fibre optique est particulièrement bien adaptée car sa bande passante est très large et l'affaiblissement de la fibre est négligeable. L'invention concerne donc un câble ayant une structure mixte, électrique et optique, dont la partie électrique est de type triaxial et constituée par des conducteurs pour transmettre l'alimentation, les signaux de service secours, et pour la mise à la terre, et dont la partie optique est constituée d'une fibre optique centrale pour transmettre les signaux vidéo à large bande ainsi que les signaux de service vidéo, interphone, télécommande et asservissement.

L'objet de la présente demande se rapporte à un câble mixte électrique et optique ayant une structure de symétrie de révolution et comprenant, le long d'un même axe central, au moins une fibre optique centrale, un conducteur tubulaire intérieur et un conducteur tubulaire intermédiaire coaxiaux et séparés par un tube isolant, et une gaine extérieure de protection. Un dispositif analogue est par exemple connu du document GB-A-1 172 272.

Selon l'invention, le câble mixte électrique et optique pour la transmission de signaux de télévision est caractérisé en ce qu'il comporte en plus une gaine de protection de la fibre optique centrale, un tube isolant à l'intérieur du conducteur intérieur et entourant coaxialement la gaine, et un conducteur tubulaire extérieur entourant un tube isolant extérieur lequel entoure le conducteur tubulaire intermédiaire, la fibre optique centrale étant destinée à transmettre les signaux vidéo.

L'invention a aussi pour objet un ensemble formé par une tête de caméra, une unité de controle et un câble mixte électrique et optique de liaison, caractérisé en ce que le câble a une structure à symétrie de révolution et comprenant le long d'un même axe central, au moins une fibre optique centrale assurant la transmission bidirectionnelle des signaux vidéo entre la tête de la caméra et l'unité de controle, un conducteur intérieur et un conducteur intermédiaire coaxiaux, séparés par un tube isolant et assurant d'une part la transmission des signaux d'alimentation de l'unité de contrôle vers la caméra, et d'autre part la transmission bidirectionnelle de signaux auxiliaires entre l'unité de contrôle et la tête de caméra, une gaine de protection de la fibre optique centrale, un tube isolant à l'intérieur du conducteur intérieur et entourant coaxialement la gaine, un conducteur tubulaire extérieur séparé du conducteur intermédiaire par un tube isolant extérieur et relié à la terre, une gaine extérieur de protection entourant le conducteur tubulaire extérieur.

L'invention a également pour objet l'application d'un câble mixte électrique et optique à la liaison entre une tête de caméra et une unité de contrôle.

D'autres particularités et avantages de l'invention apparaîtront clairement dans la description suivante donnée à titre d'exemple non limitatif, et faite en regard des figures annexées qui représentent :
- la figure 1, une vue en coupe d'un exemple de câble mixte électrique et optique, selon l'invention ;
- la figure 2, un schéma d'application du câble mixte à la liaison entre une tête de caméra et une unité de contrôle, selon l'invention .

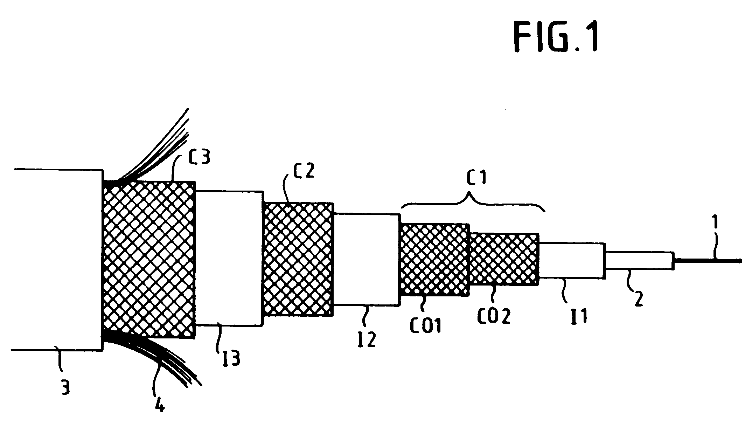

La figure 1 représente une vue en coupe d'un câble mixte électrique et optique, selon l'invention. Ce câble a une structure symétrique de révolution et comporte le long d'un axe central, au centre une fibre optique 1, munie d'une gaine de protection 2, par exemple un tube en polyester. Autour de cette fibre optique centrale, le câble mixte de la figure 1 comporte trois conducteurs électriques tubulaires, concentriques, imbriqués, C1, C2, C3. Des tubes isolants, I1, I2, I3, séparent respectivement le conducteur C1 de la gaine 2 de la fibre optique, les conducteurs C1 et C2, et les conducteurs C2 et C3. Une gaine extérieure 3 protège l'ensemble. Le conducteur C1 est constitué de deux conducteurs C01 et C02 placés l'un sur l'autre pour réduire la résistance du câble en augmentant sa section afin de réduire les pertes d'alimentation et d'améliorer la portée du câble. Mais l'utilisation d'un seul conducteur au lieu des deux conducteurs C01 et C02 est possible, sans sortir du cadre de l'invention. Les conducteurs C1 et C2 forment une structure coaxiale adaptée. Le conducteur C3 externe permet une mise à la terre et le blindage du câble afin de respecter les normes de sécurité électrique. Un renfort, 4, situé entre le conducteur C3 et la gaine extérieure, 3, par exemple en Kevlar renforce la résistance mécanique du câble.

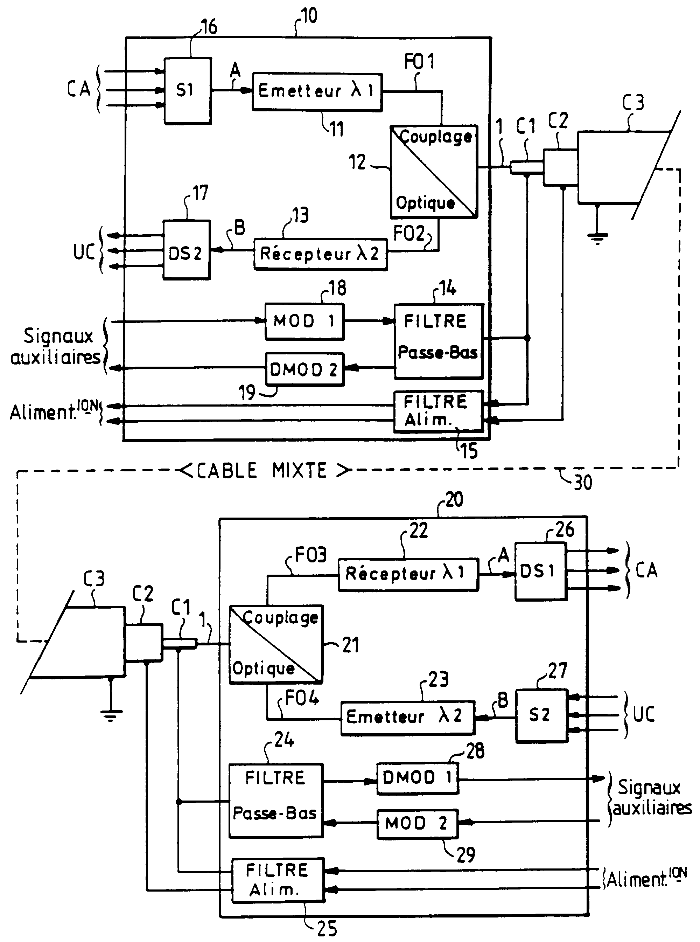

La figure 2 représente un schéma d'application du câble mixte électrique et optique à la liaison entre une tête de caméra et une unité de contrôle.

Le câble mixte électrique et optique peut être utilisé notamment dans les équipements destinés à la télévision professionnelle, par exemple pour relier une tête de caméra 10 et une unité de contrôle 20. La transmission des signaux entre une tête de caméra et une unité de contrôle, ou coffret de voie, doit être bi-directionnelle.

Les signaux à transmettre de la caméra vers l'unité de contrôle, sont :
- les signaux vidéo Rouge, Vert et Bleu, ou bien les signaux Luminance et Chrominance, etc...
- les signaux audio : interphones, micro- commentateur, micro son d'ambiance, etc...
- les signaux de service : télécommandes, reconnaissance du type de caméra, etc...
- les signaux "secours " : interphones.

Les signaux à transmettre, de l'unité de contrôle vers la caméra, sont :
- les signaux vidéo retour viseur, télésouffleur, etc...
- les signaux audio : interphones, son-commentateur, etc...
- les signaux de service : télécommandes, asservissement, etc...
- les signaux "secours " : interphones
- l'alimentation de la tête de caméra
- etc...

Pour transmettre des signaux électriques, CA, provenant d'une tête de caméra, 10, tels que les signaux vidéo, ces signaux, CA, sont préalablement digitalisés et sérialisés, dans un dispositif S1, 16, et le signal série A résultant est reçu à l'entrée d'un émetteur 11, par exemple un laser qui convertit ces signaux électriques A en signaux lumineux de longueur d'onde λ 1. Le signal lumineux de longueur d'onde λ 1 en sortie de l'émetteur 11 est alors transmis, par l'intermédiaire d'une fibre optique FO1 et d'un dispositif de couplage optique, 12, vers l'unité de contrôle 20, à travers la fibre optique, 1, du câble mixte, 30. Dans l'unité de contrôle, 20, les signaux lumineux de longueur d'onde λ 1 provenant de la tête de la caméra, 10, sont transmis, par l'intermédiaire d'un dispositif de couplage optique, 21, et d'une fibre optique FO3, à un récepteur, 22, par exemple une photodiode, qui convertit les signaux lumineux en signaux électriques afin de reconstituer en sortie du récepteur 22, les signaux électriques A qui sont alors désérialisés et convertis en signaux analogiques dans un dispositif DS1, 26, pour reconstituer les signaux CA.

De la même façon, pour transmettre des signaux électriques UC, de l'unité de contrôle, 20, vers la tête de la caméra, 10, ces signaux, UC, sont préalablement digitalisés et sérialisés dans un dispositif S2, 27, et le signal série B résultant est reçu à l'entrée d'un émetteur, 23, par exemple un laser, qui transforme les signaux électriques B en signaux lumineux de longueur d'onde λ 2. Ces signaux lumineux sont alors transmis par l'intermédiaire d'une fibre optique FO4 et du dispositif de couplage optique, 21, vers la tête de caméra, 10, à travers la fibre optique, 1, du câble mixte, 30. Dans la tête de caméra, 10, les signaux lumineux de longueur d'onde λ 2 provenant de l'unité de contrôle, 20, sont transmis par l'intermédiaire d'une fibre optique FO2 à un récepteur, 13, par exemple une photodiode, qui les convertit en signaux électriques, pour reconstituer les signaux électriques B, qui sont alors désérialisés et convertis en signaux analogiques dans un dispositif DS2, 17, pour reconstituer les signaux UC.

Les dispositifs de couplage optique, 12 et 21, déterminent le sens de transmission des signaux lumineux selon leur longueur d'onde, λ 1 et λ 2. Les signaux de longueur d'onde λ 1 sont transmis de la tête de caméra, 10, vers l'unité de contrôle, 20, alors que les signaux de longueur d'onde λ 2 sont transmis de l'unité de contrôle, 10, vers la tête de caméra, 10. Les dispositifs de couplages optiques, 12, 21, sont par exemple des coupleurs de type multiplexeurs. Les longueurs d'onde λ 1 et λ 2 sont par exemple égales à 1,3µm, respectivement à 1,55µm, et la fibre optique est de préférence une fibre monomode.

L'alimentation de la tête de caméra, 10, est commandée par l'unité de contrôle, 20. Pour cela, dans l'unité de contrôle, 20, les signaux d'alimentation sont préalablement filtrés dans un filtre Alim, 25, et transmis à la tête de caméra, 10, à travers les conducteurs C1 et C2 du câble mixte, 30. A la réception, dans la tête de caméra, 10, les signaux d'alimentation provenant de l'unité de contrôle, 20, sont de nouveau filtrés dans un filtre Alim, 15. Les signaux auxiliaires, par exemple les signaux de secours, sont transmis de façon bidirectionnelle, à travers le conducteur C1 du câble mixte, 30, de la tête de caméra vers l'unité de contrôle et de l'unité de contrôle vers la tête de caméra après avoir été préalablement modulés respectivement dans des dispositifs MOD1, 18, et MOD2, 29, et filtrés respectivement dans des filtres passe-bas 14, 24. A la réception, les signaux auxiliaires sont reconstitués après avoir été filtrés respectivement dans les filtres passe-bas 24, 14 et démodulés respectivement dans des dispositifs DMOD1, 28, et DMOD2, 19.

L'invention n'est pas limitée aux exemples de réalisation précisément décrits, notamment, il n'est pas indispensable que les deux conducteurs internes C1 et C2 forment une structure coaxiale adaptée. De même, le nombre de conducteurs n'est pas limité et il est possible de doubler ou tripler les conducteurs C1,C2 et C3, pour des applications le nécessitant.

Il est également possible d'utiliser deux ou plusieurs fibres optiques disposées au centre de la structure triaxiale. L'utilisation de deux fibres optiques permet de s'affranchir des dispositifs de couplage optique 12,21 en utilisant une fibre différente dans les deux sens de transmission. Dans le cas de l'utilisation de plusieurs fibres, cela permet de transmettre chaque signal dans une fibre différente et de s'affranchir des dispositifs de sérialisation, S1,S2, et de désérialisation DS1,DS2.

Dans l'exemple d'application précisément décrit, les longueurs d'onde λ 1 et λ 2 utilisées à l'émission et à la réception sont différentes, mais il est possible d'utiliser la même longueur d'onde, la réalisation étant plus complexe, sans sortir du cadre de l'invention.

De même, dans l'exemple d'application précisément décrit, la liaison entre la tête de caméra et l'unité de contrôle est une liaison digitale, les différents signaux transmis dans la fibre optique étant préalablement numérisés ; d'autres types de liaisons peuvent être utilisés, tel que les liaisons FM à modulation de fréquence ou les liaisons PFM : impulsion à modulation de fréquence, sans sortir du cadre de l'invention.

## Revendications

1. Câble mixte électrique et optique ayant une structure de symétrie de révolution et comprenant, le long d'un même axe central, au moins une fibre optique centrale (1), un conducteur tubulaire intérieur (C1) et un conducteur tubulaire intermédiaire (C2) coaxiaux et séparés par un tube isolant (I2), et une gaine extérieure (3) de protection, caractérisé en ce qu'il comporte en plus une gaine (2) de protection de la fibre optique centrale, un tube isolant (I1) à l'intérieur du conducteur intérieur (C1) et entourant coaxialement la gaine (2), et un conducteur tubulaire extérieur (C3) entourant un tube isolant extérieur (13) lequel entoure le conducteur tubulaire intermédiaire (C2), la fibre optique centrale étant destinée à transmettre les signaux vidéo.

2. Câble selon la revendication 1, caractérisé en ce que les trois conducteurs électriques (C1, C2, C3) constituent une structure triaxiale, le conducteur intérieur (C1) et le conducteur milieu (C2) formant une structure coaxiale adaptée et le conducteur extérieur étant mis à la masse.

3. Câble selon l'une des revendications 1 et 2, caractérisé en ce que au moins un (C1) des trois conducteurs est constitué de deux tubes coaxiaux conducteurs (CO1, CO2) en contact.

4. Application du câble selon l'une quelconque des revendications 1 à 3 à la liaison entre une tête de caméra et une unité de contrôle, caractérisée en ce que la fibre optique transmet de façon bidirectionnelle, des signaux vidéo entre la tête de caméra (10) et l'unité de contrôle (20), les conducteurs intérieur et milieu transmettant les signaux d'alimentation de l'unité de contrôle (20) et la tête de caméra (10), et des signaux auxiliaires bidirectionnellement entre l'unité de contrôle (20) vers la tête de caméra (10), le conducteur extérieur étant relié à la masse.

5. Application selon la revendication 4, caractérisé en ce que, avant transmission dans la fibre optique , les signaux vidéo sont, pour chaque sens de transmission, digitalisés et sérialisés dans un dispositif S1 au niveau de la tête de caméra (10) ou dans un dispositif S2 au niveau de l'unité de contrôle (20), puis transformés en signaux lumineux de longueur d'onde respective (λ₁, λ₂) par emetteur laser respectif (11, 23).

6. Application selon la revendication 5, caractérisée en ce que les longueurs d'ondes (λ1, λ2) des signaux lumineux sont différentes et en ce que le sens de transmission est selectionné par un dispositif de couplage (12, 21) selon la longueur d'onde (λ₁, λ₂), ce dispositif de couplage étant placé entre l'émetteur laser (11, 23) et la fibre optique (1).

7. Ensemble formé par une tête de caméra (10), une unité de contrôle (20) et un câble mixte électrique et optique de liaison, caractérisé en ce que le câble a une structure à symétrique de révolution et comprend le long d'un même axe central, au moins une fibre optique (1) centrale assurant la transmission bidirectionnelle des signaux vidéo entre la tête de camera (10) et l'unité de contrôle (20), un conducteur intérieur (C1) et un conducteur intermédiaire (C2) coaxiaux, séparés par un tube isolant (12) et assurant d'une part la transmission des signaux d'alimentation de l'unité de contrôle (20) vers la tête de caméra (10), et d'autre part la transmission bidirectionnelle de signaux auxiliaires entre l'unité de contrôle (20) et la tête de caméra (10), une gaine (2) de protection de la fibre optique centrale, un tube isolant (I1) à l'interieur du conducteur intérieur (C1) et entourant coaxialement la gaine (2), et un conducteur tubulaire extérieur (C3) séparé du conducteur intermédiaire (C2) par un tube isolant extérieur (I3) et relié à la terre, une gaine extérieure (3) de protection entourant le conducteur tubulaire extérieur (C3).

## Patentansprüche

1. Elektrisches und optisches gemischtes Kabel, das eine rotationssymmetrische Struktur aufweist und längs ein und derselben zentralen Achse wenigstens eine zentrale optische Faser (1), einen inneren rohrförmigen Leiter (C1) und einen in einer Zwischenposition angeordneten rohrförmigen Leiter (C2), wobei diese Leiter koaxial und durch eine isolierende Hülse (I2) voneinander getrennt sind, sowie einen äußeren Schutzmantel (3) umfaßt, dadurch gekennzeichnet, daß es außerdem einen Schutzmantel (2) der zentralen optischen Faser, eine isolierende Hülse (I1), die sich innerhalb des inneren Leiters (C1) befindet und den Mantel (2) koaxial umschließt, und einen äußeren rohrförmigen Leiter (C3) umfaßt, der eine äußere isolierende Hülse (I3) umschließt, welche den in einer Zwischenposition angeordneten rohrförmigen Leiter (C2) umschließt, wobei die zentrale optische Faser dazu bestimmt ist, die Videosignale zu übertragen.

2. Kabel nach Anspruch 1, dadurch gekennzeichnet, daß die drei elektrischen Leiter (C1, C2, C3) eine triaxiale Struktur bilden, wobei der innere Leiter (C1) und der mittlere Leiter (C2) eine angepaßte koaxiale Struktur bilden und der äußere Leiter mit der Masse verbunden ist.

3. Kabel nach einem der Ansprüche 1 oder 2, dadurch gekennzeichnet, daß wenigstens einer (C1) der drei Leiter aus zwei miteinander in Kontakt stehenden leitfähigen koaxialen Hülsen (C01, C02) besteht.

4. Anwendung des Kabels nach einem der Ansprüche 1 bis 3 für die Verbindung zwischen einem Kameragehäuse und einer Kontrolleinheit, dadurch gekennzeichnet, daß die optische Faser Videosignale bidirektional zwischen dem Kameragehäuse (10) sowie der Kontrolleinheit (20) überträgt, wobei der innere und der mittlere Leiter die Speisesignale der Kontrolleinheit (20) und des Kameragehäuses (10) sowie Hilfssignale bidirektional zwischen der Kontrolleinheit (20) und dem Kameragehäuse (10) übertragen, wobei der äußere Leiter mit der Masse verbunden ist.

5. Anwendung nach Anspruch 4, dadurch gekennzeichnet, daß die Videosignale vor Übertragung in der optischen Faser für jede Übertragungsrichtung in einer in Höhe des Kameragehäuses (10) befindlichen Vorrichtung S1 oder in einer in Höhe der Kontrolleinheit (20) befindlichen Vorrichtung S2 digitalisiert und serialisiert und danach von einem entsprechenden Laser-Sender (11, 23) in Lichtsignale mit einer entsprechenden Wellenlänge (λ1, λ2) umgewandelt werden.

6. Anwendung nach Anspruch 5, dadurch gekennzeichnet, daß die Wellenlängen (λ1, λ2) der Lichtsignale verschieden sind, und dadurch, daß die Übertragungsrichtung von einer Koppelvorrichtung (12, 21) anhand der Wellenlänge (λ1, λ2) gewählt wird, wobei diese Koppelvorrichtung zwischen dem Laser-Sender (11, 23) und der optischen Faser (1) angeordnet ist.

7. Anlage, die von einem Kameragehäuse (10), einer Kontrolleinheit (20) und einem elektrischen und optischen gemischten Verbindungskabel gebildet wird, dadurch gekennzeichnet, daß das Kabel eine rotationssymmetrische Struktur hat und längs ein und derselben zentralen Achse wenigstens eine zentrale optische Faser (1), welche die bidirektionale Übertragung der Videosignale zwischen dem Kameragehäuse (10) und der Kontrolleinheit (20) gewährleistet, einen inneren Leiter (C1) und einen in einer Zwischenposition angeordneten Leiter (C2), wobei diese Leiter koaxial sind, durch eine isolierende Hülse (I2) voneinander getrennt sind und einerseits die Übertragung der Speisesignale von der Kontrolleinheit (20) zum Kameragehäuse (10) und andererseits die bidirektionale Übertragung von Hilfssignalen zwischen der Kontrolleinheit (20) und dem Kameragehäuse (10) gewährleisten, einen Schutzmantel (2) der zentralen optischen Faser, eine isolierende Hülse (11), die sich innerhalb des inneren Leiters (C1) befindet und den Mantel (2) koaxial umschließt, einen äußeren rohrförmigen Leiter (C3), der von dem in einer Zwischenposition angeordneten Leiter (C2) durch eine äußere isolierende Hülse (13) getrennt und mit der Erde verbunden ist, und einen den äußeren rohrförmigen Leiter (C3) umschließenden äußeren Schutzmantel (3) umfaßt.

## Claims

1. Combined electrical and optical cable having a rotationally symmetric structure and comprising, along the same central axis, at least one central optical fibre (1), an inner tubular conductor (C1) and an intermediate tubular conductor (C2) which are coaxial and separated by an insulating tube (12), and an outer protective sheath (3), characterized in that it additionally includes a sheath (2) for protecting the central optical fibre, an insulating tube (I1) within the inner conductor (C1) and coaxially surrounding the sheath (2), and an outer tubular conductor (C3) surrounding an outer insulating tube (13) which surrounds the intermediate tubular conductor (C2), the central optical fibre being intended to transmit the video signals.

2. Cable according to Claim 1, characterized in that the three electrical conductors (C1, C2, C3) constitute a triaxial structure, the inner conductor (C1) and the middle conductor (C2) forming a matched coaxial structure and the outer conductor being earthed.

3. Cable according to one of Claims 1 and 2, characterized in that at least one (C1) of the three conductors consists of two conducting coaxial tubes (C01, C02) in contact.

4. Application of the cable according to any one of Claims 1 to 3 to the link between a camera head and a control unit, characterized in that the optical fibre transmits, bidirectionally, video signals between the camera head (10) and the control unit (20), the inner and middle conductors transmitting the power supply signals from the control unit (20) and the camera head (10), and auxiliary signals bidirectionally between the control unit (20) to the camera head (10), the outer conductor being linked to earth.

5. Application according to Claim 4, characterized in that, before transmission in the optical fibre, the video signals are, for each transmission direction, digitized and serialized in a device S1 within the camera head (10) or in a device S2 within the control unit (20), then converted into light signals of respective wavelength (λ₁, λ₂) by a respective laser transmitter (11, 23).

6. Application according to Claim 5, characterized in that the wavelengths (λ₁, λ₂) of the light signals are different and in that the transmission direction is selected by a coupling device (12, 21) according to the wavelength (λ₁, λ₂), this coupling device being placed between the laser transmitter (11, 23) and the optical fibre (1).

7. Assembly formed by a camera head (10), a control unit (20) and a combined electrical and optical linking cable, characterized in that the cable has a rotationally symmetric structure and comprises, along the same central axis, at least one central optical fibre (1) providing bidirectional transmission of the video signals between the camera head (10) and the control unit (20), an inner conductor (C1) and an intermediate conductor (C2) which are coaxial, separated by an insulating tube (I2) and providing, on the one hand, transmission of the supply signals from the control unit (20) to the camera head (10) and, on the other hand, the bidirectional transmission of auxiliary signals between the control unit (20) and the camera head (10), a sheath (2) for protecting the central optical fibre, an insulating tube (I1) within the inner conductor (C1) and coaxially surrounding the sheath (2), and an outer tubular conductor (C3) separated from the intermediate conductor (C2) by an outer insulating tube (13) and linked to earth, an outer protective sheath (3) surrounding the outer tubular conductor (C3).
